Europäisches Patentamt

European Patent Office

Office européen des brevets

(11) Veröffentlichungsnummer: **0 451 275 A1**

(12)
# EUROPÄISCHE PATENTANMELDUNG
## veröffentlicht nach Art. 158 Abs. 3 EPÜ

(21) Anmeldenummer: 90905351.4

(22) Anmeldetag: 23.10.89

(86) Internationale Anmeldenummer:
PCT/SU89/00273

(87) Internationale Veröffentlichungsnummer:
WO 91/06013 (02.05.91 91/10)

(51) Int. Cl.⁵: G01P 15/09

(43) Veröffentlichungstag der Anmeldung:
16.10.91 Patentblatt 91/42

(84) Benannte Vertragsstaaten:
BE DE FR GB IT SE

(71) Anmelder: **VSESOJUZNOE KHOZRASCHETNOE VNESHNEEKONOMICHESKOE OBIEDDINENIE "TEKHSNABEXPORT"**
**Staromonetny per., 26**
**Moscow, 109180(SU)**

(72) Erfinder: **SMIRNOV, Vladimir Vasilievich**
**pereulok Sadovy, 33-19 Vladimirska oblast**
**Juriev-Polsky, 691826(SU)**
Erfinder: **KIRPICHEV, Alexandr A. ulitsa Alexeeva,7-20**
**Starorussky raion Novgorodskaya oblast poselok Novoselsky, 175207(SU)**

(74) Vertreter: **Ritter und Edler von Fischern, Bernhard,Dipl.-Ing. et al**
**HOFFMANN - EITLE & PARTNER**
**Arabellastrasse 4**
**W-8000 München 81(DE)**

(54) **DREI-KOMPONENTEN-PIEZOELEKTRISCHER BESCHLEUNIGUNGSMESSER.**

(57) Der dreikomponentige piezoelektrische Beschleunigungsmesser ist auf der Basis von drei gleichen empfindlichen Piezoelementen (1, 2, 3) ausgeführt, bei denen die Achsen (4, 5) der maximalen Empfindlichkeit des ersten Piezoelementes (1) und des zweiten Piezoelementes (2) zueinander senkrecht sind und in einer Ebene liegen, wobei die Achse (6) der maximalen Empfindlichkeit des dritten Piezoelementes (3) zur Ebene der Achsen (4, 5) der maximalen Empfindlichkeit des ersten Piezoelementes (1) und des zweiten Piezoelementes (2) senkrecht ist und diese Ebene in einem Punkt (7) schneidet, der auf der Halbierenden (8) des Schnittwinkels der Achsen (4, 5) der maximalen Empfindlichkeit des ersten Piezoelementes (1) und des zweiten Piezoelementes (2) liegt, während sämtliche Piezoelemente (1, 2, 3) sich auf einer Seite der Spitze (9) des erwähnten Winkels befinden, wobei die Stromzuleitungen (10, 11, 12) zur Abnahme der Ladung eines Vorzeichens elektrisch verbunden und zu einer Einheit (13) mechanisch vereinigt sind, und die Stromzuleitungen (14, 15, 16) zur Abnahme der Ladung des anderen Vorzeichens elektrisch isoliert und zu derselben Einheit (13) mechanisch vereinigt sind, die von einem Steifigkeitselement (17) umfaßt ist, wobei die Richtung der Stromzuleitungen (14, 15, 16) in dieser Einheit (13) zur erwähnten Ebene senkrecht ist und diese in einem Punkt schneidet, der in unmittelbarer Nähe von der Spitze (9) des erwähnten Winkels liegt.

EP 0 451 275 A1

FIG.1

Technisches Gebiet

Die Erfindung bezieht sich auf die Meßtechnik und kann in Geräten angewendet werden, die den Betrag und die Wirkungsrichtung eines vollen Vibrations- und Stoßbeschleunigungsvektors von Erzeugnissen verschiedener Zweckbestimmung registrieren, sie betrifft insbesondere einen dreikomponentigen piezoelektrischen Beschleunigungsmesser.

Gebiete der zweckmäßigsten Anwendung der Erfindung sind die folgenden: Flugzeug- und Werkzeugmaschinenbau, Kraftfahrzeug- und Gerätebau, Raketentechnik, Energieausrüstungen, Technologie der Produktionsprozesse, Landtechnik.

Zugrundeiliegender Stand der Technik

Es sindreikomponentige Beschleunigungsmesser bekannt, die zum Messen des vollen Beschleunigungsvektors bestimmt sind und eine feste Trägheitsmasse sowie drei Paare von Piezoelementen einschließen, deren Empfindlichkeitsachsen in drei zueinander senkrechten Richtungen orientiert sind und sich in einem Punkt schneiden (SU, A, Nr. 115537, 397868, 667926, 624171).

Die Beschleunigungsmesser (SU, A, Nr. 115537, 397868, 667926) weisen folgende Nachteile auf: nachteilige Anordnung ihrer Einzelteile, die zur Vergrößerung des Volumens dieser Geräte führt; strukturelle Kompliziertheit ihrer Konstruktion (Aufbau aus mehreren Einzelelementen) die den Amplituden- und Frequenzbereich verringert; komplizierte Zentrierung der Trägheitsmasse, die die Empfindlichkeit der Beschleunigungsmesser gegenüber den nicht meßbaren Beschleunigungskomponenten steigert.

Darüber hinaus besteht ein gemeinsamer Nachteil derartiger Beschleunigungsmesser in der Notwendigkeit einer elektrischen Isolierung der Stromabnehmer eines jeden von den sechs empfindlichen Piezoelementen was die Abmessungen und die Masse der Konstruktion vergrößert.

Zu den Hauptnachteilen des dreikomponentigen Beschleunigungsmessers mit flüssiger Trägheitsmasse (SU, A, Nr. 624171) gehören eine verhältnismäßig niedrige Empfindlichkeit infolge einer geringen Dichte des Trägheitsmassenmaterials, eine kleine Eigenfrequenz aufgrund der geringen Konstruktionssteifigkeit, technologische Schwierigkeiten, die durch das schwer zu erreichende Füllen (und somit ein schlechtes Benetzen) und die notwendige Hermetisierung des geschlossenen Trägheitsmassenvolumens sowie durch die notwendige Gewährleistung einer Parallelität der gegenüberliegenden Piezoelemente bedingt sind.

Es ist ferner ein dreikomponentiger Beschleunigungsmesser bekannt, der aus drei einkomponentigen Beschleunigungsmessern zylindrischer Form besteht, die sich auf einer gemeinsamen Grundplatte in Form eines kubischen Gehäuses befinden und deren Empfindlichkeitsachsen zueinander senkrecht sind und sich in einem Punkt schneiden (Katalog der Firma "Brühl und Kjer", Dänemark, Beschleunigungsmesser, Beschreibung und Anwendung, Februar 1973, SS. 129 bis 131).

Jedoch besitzen derartig ausgeführte Beschleunigungsmesser gleichfalls große Abmessungen und eine große Masse (35 g, 17 cm³), wobei die drei auf den anliegenden Außenflächen des kubischen Gehäuses liegenden Stromzuleitungen ein zusätzliches Installationsvolumen erforderlich machen, das das vom Beschleunigungsmesser unmittelbar beanspruchte Volumen um ein 3 bis 4 fachses übersteigt.

Es ist ein dreikomponentiger piezoelektrischer Beschleunigungsmesser bekannt, der als Seismograf zur Anwendung gelangt und drei gleiche empfindliche zylindrische Piezoelemente enthält, bei denen die Achsen der maximalen Empfindlichkeit zueinander senkrecht sind, wobei die Abnahme der elektrischen Ladung von den Oberflächen eines jeden empfindlichen Piezoelementes mittels Stromzuleitungen geschieht. Die Achsen der maximalen Empfindlichkeit sind zueinander senkrecht und unter einem Winkel von 35° 20' zur Horizontebene geneigt, schneiden sich nicht und liegen in einem Abstand voneinander, der der Summe der Halbmesser der anliegenden zylindrischen Piezoelemente gleich ist, während die Projektionen der Achsen der maximalen Empfindlichkeit unter einem Winkel von 60° liegen (SU, A, Nr. 1057910).

Diese Lösung ist aber nur für zylindrische empfindliche Piezoelemente (Umwandlungseinheiten) mit einem Verhältnis des Durchmessers zu der Elementenlänge von weniger als Eins optimal. Allerdings ist beim Messen von Vibrationsbeschleunigungen mit einer Frequenz von einigen bis Dutzenden kHz sowie von Stoßbeschleunigungen geringer Dauer (Dutzende, Hunderte ms) die Gewährleistung einer hohen Eigenfrequenz der Beschleunigungsmesser erforderlich, was in der ersten Reihe vor allem von den Frequenzkennwerten der empfindlichen Piezoelemente abhängt. Die Eigenfrequenz eines solchen Elementes ist bekanntlich umso höher, je größer die Elementsteifigkeit ist, und diese letztere setzt voraus, daß das Verhältnis des Durchmessers zur Länge des empfindlichen Piezoelementes so hoch wie möglich sein soll.

Aus der Notwendigkeit einer Erweiterung des Frequenzbereiches des Beschleunigungsmessers ergibt sich die Notwendigkeit einer Vergrößerung der elektrischen Kapazität des empfindlichen Piezoelementes, was gleichfalls eine Erhöhung des Verhältnisses des Durchmessers zur Länge des

Piezoelementes voraussetzt.

$$K = \frac{E \cdot S}{L}$$

$$C = \frac{\varepsilon \cdot \varepsilon_0 \, S}{L} \, ,$$

worin es bedeutet:

C - eletrische Kapazität des empfindlichen Piezoelementes;

K - Steifigkeit des empfindlichen Piezoelementes;

S - Flächeninhalt der Grundfläche des empfindlichen Piezoelementes;

L - Länge der Erzeugenden eines jeden empfindlichen Piezoelementes;

$\varepsilon_0$ - elektrische Feldkonstante;

$\varepsilon$ - dielektrische Konstante des Materials des empfindlichen Piezoelementes;

E - Youngscher Modul des Materials des empfindlichen Piezoelementes.

Zur Gewährleistung einer hohen Eigenfrequenz und elektrischen Kapazität der empfindlichen Piezoelemente ist eine Erhöhung des Flächeninhalts der Grundfläche und eine Verkürzung der Erzeugendenlänge erforderlich, was zum Beabstanden der empfindlichen Piezoelemente im Baum und somit zur Vergrößerung der Einrichtungsabmessungen führt.

Darüberhinaus ist ein zusätzliches Volumen für die Stromzuleitungen erforderlich, von denen jeder an die zylindrische Seitenfläche des empfindlichen Piezoelementes angeschlossen ist.

Ein Nachteil dieser Konstruktion besteht darin, daß der dreikomponentige Beschleunigungsmesser weniger als eine Aufnahmefläche auf der Seite einer der Grundflächen des empfindlichen Beschleunigungsmessers besitzt.

Da die Masse des Beschleunigungsmessers beträchtlich ist, so kann in dem Fall, wenn die Masse des zu messenden Objektes mit der Masse des Beschleunigungsmessers vergleichbar ist, eine gegenseitige Beeinflussung derselben erfolgen, was die Güte der zu registrierenden Information wegen Abnahme der Resonanzfrequenz des zu messenden Objektes verschlechtert.

Offenbarung der Erfindung

Der Erfindung liegt die Aufgabe zugrunde, einen dreikomponentigen piezoelektrischen Beschleunigungsmesser zu schaffen, in dem dank einer neuen gegenseitigen Anordnung der empfindlichen Piezoelemente und einer neuen konstruktiven Ausführung der Stromzuleitungen eine Kompaktheit der Konstruktion bei erweitertem Frequenzbereich, erhöhter Güte der zu registriertereenden Informationen und bequemem Betrieb gewährleistet ist.

Dies wird dadurch erreicht, daß in einem dreikomponentigen piezoelektrischen Beschleunigungsmesser auf der Basis von drei gleichen empfindlichen Piezoelementen, bei denen die Achsen ihrer maximalen Empfindlichkeit zueinander senkrecht sind, wobei die Abnahme der elektrischen Ladung von der Oberfläche eines jeden empfindlichen Piezoelementes mittels Stromzuleitungen geschieht, erfindungsgemäß die empfindlichen Piezoelemente nahe aneinander so angeordnet sind, daß die Achsen der maximalen Empfindlichkeit des ersten und des zweiten Piezoelementes zueinander senkrecht sind und in einer Ebene liegen, während die Achse der maximalen Empfindlichkeit des dritten Piezoelementes zur Ebene der Achsen der maximalen Empfindlichkeit des ersten und des zweiten Piezoelementes senkrecht ist und sie in einem Punkt schneidet, der auf der Halbierenden des Schnittwinkels der Achsen der maximalen Empfindlichkeit des ersten und des zweiten Piezoelementes liegt, wobei sämtliche Piezoelemente auf einer Seite von der Spitze des erwähnten Winkels liegen, während die Stromzuleitungen zur Abnahme der elektrischen Ladung eines Vorzeichens elektrisch verbunden und zu einer Einheit mechanisch vereinigt sind, und die Stromzuleitungen zur Abnahme der elektrischen Ladung des anderen Vorzeichens elektrisch isoliert und zu derselben von einem Steifigkeitselement umfaßten Einheit vereinigt sind, wobei die Richtung der Stromzuleitungen in dieser Einheit zur erwähnten Ebene senkrecht ist und sie in einem Punkt schneidet, der sich in unmittelbarer Nähe der Spitze des erwähnten Winkels befindet.

Die erfindungsgemäße konstruktive Lösung der gegenseitigen Anordnung der Piezoelemente und der Ausführung der Stromzuleitungen gestattet es, eine Kompaktheit der Konstruktion des dreikomponentigen Beschleunigungsmessers bei der gleichzeitigen Erweiterung des Frequenzbereiches desselben und einer Erhöhung der Güte der zu registrierenden Informationen zu gewährleisten.

Die größte Anordnungsdichte kann in einem dreikomponentigen piezoelektrischen Beschleunigungsmesser erreicht werden, in dem das erste und zweite Piezoelement von der Spitze des erwähnten Winkels in gleichem Abstand liegen.

Zweckmäßigerweise wird das Steifigkeitselement im dreikomponentigen Beschleunigungsmesser in Form einer Drahtbandage ausgebildet.

Dadurch können sechs Stromzuleitungen in einer Einheit mechanism vereinigt drei Stromzuleitungen zur Abnahme der Ladung eines Vorzeichens elektrisch verbindet drei Stromzuleitungen zur Abnahme der Ladung des anderen Vorzeichens elektrisch isoliert und die radiale Steifigkeit der vereinigten Stromzuleitungseinheit gesichert werden.

Ferner werden zweckmäßigerweise die elektrisch voneinander getrennten Stromzuleitungen in Form eines dreiadrigen Antivibrationskabels ausgebildet, auf das eine umlötete Drahtbandage aufgelegt ist, die mit einem Drahtanzug ausgeführt, zwischen den Windungen spaltlos und mit den konstruktiven Elementen des Kabels zusammengeführt ist.

Die elektrisch getrennten Stromzuleitungen können jeweils in Form eines eigenen Antivibrationskabels ausgeführt sein, wobei auf die Kabel in der vereinigten Einheit eine umlötete Drahtbandage aufgelegt wird, die mit einem Drahtanzug ausgeführt, zwischen den Windungen spaltlos und mit den konstruktiven Elementen der Kabel zusammengefügt ist.

Dies gestattet es, die Anordnung der vereinigten Einheit der Stromzuleitungen im Anbringungsraum der Piezoelemente konstruktiv zu verwirklichen, ohne das Volumen der erfindungsgemäßen Anordnung der Piezoelemente zu vergrößern, und ermöglicht eine hohe axiale und radiale Steifigkeit der vereinigten Stromzuleitungseinheit.

Die größte Anordnungsdichte der Piezoelemente und der vereinigten Stromzuleitungseinheit ist in dem Fall möglich, wenn die empfindlichen Piezoelemente zylindrisch ausgeführt sind, wobei das dritte empfindliche Piezoelement so angeordnet ist, daß der Schnittpunkt seiner Achse der maximalen Empfindlichkeit mit der Halbierenden des erwähnten Winkels in einem Abstand von der Spitze dieses Winkels liegt, der kleiner als oder gleich $L\sqrt{2}$ ist, wo L die Länge der Erzeugenden des empfindlichen Piezoelementes bedeutet.

Am effektivsten wird der dreikomponentige piezoelektrische Beschleunigungsmesser mit einem Gehäuse ausgestattet, in dem die Piezoelemente und die Stromzuleitungen untergebracht sind, und das die vereinigende Einheit für das elektrische Verbinden der zur Abnahme der elektrischen Ladung eines Vorzeichens bestimmten Stromzuleitungen darstellt und kubisch ausgeführt ist, wobei die Piezoelemente zweckmäßigerweise im Gehäuse so angeordnet sind, daß jede der zueinander senkrechten Gehäusewände der Grundfläche nur eines zylindrischen Piezoelementes parallel ist.

Ein kubisches Gehäuse ist sowohl für einen bequemen Betrieb des Beschleunigungsmessers (Montage des Beschleunigungsmessers am Prüfobjekt kann über eine beliebige freie Seitenfläche erfolgen), als auch der zu gewährleistenden Kompaktheit der Konstruktionen optimal.

Kurze Beschreibung der Zeichnungen

Im folgenden wird die Erfindung anhand der Beschreibung konkreter Ausführungsbeispiele derselben unter Bezugnahme auf die beiliegenden Zeichnungen näher erläutert, in denen es zeigt:

Fig.1 einen dreikomponentigen piezoelektrischen Beschleunigungsmesser mit gegenseitiger Lage empfindlicher Piezoelemente gemäß der Erfindung, in der dimetrischen Frontalprojektion;

Fig.2 einen dreikomponentigen piezoelektrischen Beschleunigungsmesser im Schnitt nach der Ebene, in der die Achsen der maximalen Empfindlichkeit des ersten und des zweiten empfindlichen Piezoelementes liegen, gemäß der Erfindung;

Fig.3 einen dreikomponentigen piezoelektrischen Beschleunigungsmesser im Schnitt nach der Ebene, in der die Achse der maximalen Empfindlichkeit des dritten empfindlichen Piezoelementes und die Halbierende des Schnittwinkels der Achsen der maximalen Empfindlichkeit des ersten und des zweiten empfindlichen Piezoelementes liegen, gemäß der Erfindung, im Schnitt nach der Linie II-II der Fig.2;

Fig.4 vergleichbare Abhängigkeitskurven des Volumens eines dreikomponentigen piezoelektrischen Beschleunigungsmessers vom Verhältnis des Durchmessers des empfindlichen Piezoelementes zu dessen Länge, gemäß der Erfindung.

Beste Ausführungsform der Erfindung

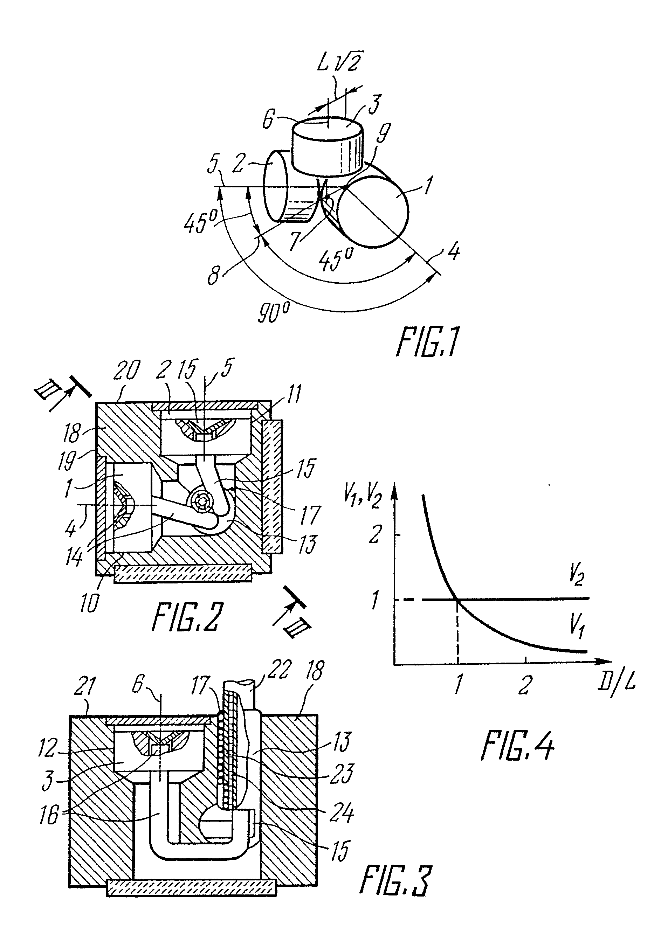

Der dreikomponentige piezoelektrische Beschleunigungsmesser (Fig.1) ist auf der Basis von drei gleichen empfindlichen Piezoelementen 1, 2, 3 ausgeführt, bei denen Achsen 4, 5, 6 ihrer maximalen Empfindlichkeit zueinander senkrecht sind, wobei die Achsen 4, 5 der Piezoelemente 1, 2 in einer Ebene liegen, während die Achse 6 des Piezoelementes 3 zur Ebene der Achsen 4 und 5 senkrecht ist und diese in einem Punkt 7 schneidet, der auf einer Halbierenden 8 des Schnittwinkels der Achsen 4 und 5 liegt, wobei sämtliche Piezoelemente 1, 2, 3 auf einer Seite einer Spitze 9 dieses Winkels, die Piezoelemente 1, 2 aber in gleichem Abstand von derselben liegen.

Sämtliche Piezoelemente 1, 2, 3 besitzen eine zylindrische Form, wobei die Achse 6 des Piezoelementes 3 die Halbierende 8 in einem Abstand $L\sqrt{2}$ von der Winkelspitze 9 schneidet, wo L die Länge der Erzeugenden des zylindrischen Piezoelementes bedeutet.

In Fig.2 ist ein dreikomponentiger piezoelektrischer Beschleunigungsmesser im Schnitt nach der Ebene, in welcher die Achsen 4 und 5 liegen, in der Draufsicht abgebildet. Die Stromzuleitungen 10, 11 (Fig.2), 12 (Fig.3) zur Abnahme der Ladung eines Vorzeichens sind elektrisch verbunden und zu einer Einheit 13 mechanisch vereinigt. Die Stromzuleitungen 14 (Fig.2), 15, 16 (Fig.3) zur Abnahme der Ladung des anderen Vorzeichens sind elektrisch isoliert und zu derselben Einheit 13 vereinigt, die von einem Steifigkeitselement 17 umfaßt ist, das in Form einer Drahtbandage ausgebildet ist. Die Richtung sämtlicher Stromzuleitungen 14 (Fig.2), 15, 16 (Fig.3) in dieser Einheit 13 ist zur erwähnten Anordnungsebene der Achsen 4 und 5 (Fig.2) senkrecht und schneidet diese in einem Punkt, der in unmittelbarer Nähe der Spitze 9 (Fig.1) des erwähnten Schnittwinkels der Achsen 4 und 5 liegt.

Ein Gehäuse 18 (Fig.3), in dem die Piezoelemente 1, 2, 3, die Stromzuleitungen 14, 15, 16 sowie die Einheit 13 untergebracht sind, stellt eine vereinigende Einheit zum elektrischen Verbinden der Stromleitungen 10, 11, 12 dar und ist kubisch ausgeführt, wobei die Piezoelemente im Gehäuse so angeordnet sind, daß jede der zueinander senkrechten Wandflächen 19, 20 (Fig.2), 21 (Fig.3) der Grundfläche nur eines Piezoelementes parallel ist.

In Fig.3 ist ein dreikomponentiger piezoelektrischer Beschleunigungsmesser im Schnitt nach der Ebene dargestellt, in der die Achse 6 und die Halbierende 8 (Fig.1) des Schnittwinkels der Achsen 4 und 5 liegen. Die eleketrisch getrennten Stromzuleitungen 14, 15 (Fig.2), 16 (Fig.3) sind in Form eines dreiadrigen Antivibrationskabels 22 ausgebildet,auf das eine umlötete Drahtbandage (Steifigkeitselement 17) aufgelegt ist, die mit einem Drahtanzug ausgeführt, zwischen den Windungen spaltlos und mit den anderen konstruktiven Kabelelementen - einer Außenisolation 23 und einem Abschirmgeflecht 24 - zusammengefügt ist.

Die elektrisch getrennten Stromzuleitungen 14, 15, 16 können ferner auch jeweils in Form eines eigenen (nicht mitabgebildeten) Antivibrationskabels ausgebildet sein, auf die in der vereinigten Einheit eine umlötete Drahtbandage aufgelegt ist, die ebenfalls mit einem Drahtanzug ausgeführt, zwischen den Windungen spaltlos und mit den konstruktiven Kabelelementen - einer Außenisolation und einem Abschirmgeflecht - zusammengeführt ist.

Die versuchsmässigen, gemäss der vorliegenden Erfindung ausgeführten Beschleunigungsmess-´ermuster besassen empfindliche Piezoelemente mit einen Verhältnis D/L = 2,5. Die Stromzuleitungen waren im Innern des Gehäuses 18 (Fig. 2) zu einem Strang vereinigt, der aus demselben nach aussen herausgeführt war. In zylindrischen Aussparungen an freien Seitenflächen des Gehäuses 18 waren isolierende Befestigungselemente eingeklebt.

Als Material für die empfindliche Piezoelemente 1, 2, 3 diente Piezokeramik, als Werkstoff für das Gehäuse 18 - eine Titanlegierung. Die isolierenden Befestigungselemente waren aus einem keramischen Material gefertigt.

Praktisch konnte folgendes erzielt werden: bei einer Empfindlichkeit von 2 pC/g eines jeden empfindlichen Piezoelementes besitzt der dreikomponentige Beschleunigungsmesser ein Volumen von 1 $cm^3$, eine Masse von 5 g, der Amplituden- und Frequenzbereich der zu messenden Beschleunigungen betrug jeweils bis 10000 g und 40 kHz.

In Fig.4 sind Abhängigkeitskurven des Volumens $V_1$ des dreikomponentigen Beschleunigungsmessers in der erfindungsgemäßen Anordnung sowie des Volumens $V_2$ des bekannten dreikomponentigen Beschleunigungsmessers (SU, A, 1057910) vom Verhältnis des Durchmessers D des Piezoelementes zu dessen Länge L dargestellt.

Bei der Gewährleistung der dem erfindungsgemäßen Beschleunigungsmesser entsprechenden technischen Daten besitzt der gemäß dem bekannten Anordnungsschema ausgeführte dreikomponentige piezoelektrische Beschleunigungsmesser (SU, A, 1057910) ein Volumen von 3 $cm^3$ und eine dementsprechende Masse von 13 g. Davon legen insbesondere die in Fig.4 abgebildeten Abhängigkeitskurven Zeugnis ab.

Gewerbliche Verwertbarkeit

Die vorliegende Erfindung gestattet es, in den dreikomponentigen Beschleunigungsmessern eine Kombination der Miniaturausführung, einer hohen Stoßfestigkeit und einer annehmbaren Empfindlichkeit konstruktiv zu gewährleisten.

Angesichts einer fortwährend zunehmenden Anordnungsdichte der zu messenden Objekte gestattet es der erfindungsgemäß in Miniaturausführung vorliegende dreikomponentige Beschleunigungsmesser mit drei Aufnahmeflächen, Messungen an schwer zugänglichen Stellen kleiner Elemente verschiedener Konstruktion durchzuführen sowie die Güte der zu registrierenden Informationen dank einer Minderung der gegenseitigen Beeinflussung der Beschleunigungsmesser- und Objektmassen zu verbessern.

Die Erfindung kann in verschiedenen Technikzweigen eine breite Anwendung finden, wo das Messen des Betrages und der Wirkungsrichtung eines vollen Stoß- bzw. Vibrationsbeschleunigungsvektors erforderlich ist, so beispielsweise bei dynamischen Standversuhen, in Diagnosesystemen, bei Emplosionsversuchen (Stoßversuchen) sowie in Systemen der automatischen Überwachung (in den Monitoringsystemen).

## Patentansprüche

1. Dreikomponentiger piezoelektrischer Beschleunigungsmesser auf der Basis von drei gleichen empfindlichen Piezoelementen (1, 2, 3), bei denen die Achsen (4, 5, 6) ihrer maximalen Empfindlichkeit zueinander senkrecht sind, wobei die Abnahme der elektrischen Ladung von der Oberfläche eines jeden empfindlichen Piezoelementes (1, 2, 3) mittels Stromzuleitungen (10, 11, 12, 14, 15, 16) geschieht, **dadurch gekennzeichnet,** daß die empfindlichen Piezoelemente nahe aneinander so angeordnet sind, daß die Achsen (4,5) der maximalen Empfindlichkeit des ersten Piezoelementes (1) und des zweiten Piezoelementes (2) zueinander senkrecht sind und in einer Ebene liegen, während die Achse (6) der maximalen Empfindlichkeit des dritten Piezoelementes (3) zu der Ebene der Achsen (4,5) der maximalen Empfindlichkeit des ersten Piezoelementes (1) und des zweiten Piezoelementes (2) senkrecht ist und diese in einem Punkt (7) schneidet, der auf einer Halbierenden (8) des Schnittwinkels der Achsen (4, 5) der maximalen Empfindlichkeit des ersten Piezoelementes (1) und des zweiten Piezoelementes (2) liegt, wobei sämtliche Piezoelemente (1, 2, 3) sich auf einer Seite von einer Spitze (9) des erwähnten Winkels befinden, während die Stromzuleitungen (10, 11, 12) zur Abnahme der Ladung eines Vorzeichens elektrisch verbunden und zu einer Einheit (13) mechanisch vereinigt sind, und die Stromzuleitungen (14, 15, 16) zur Abnahme der Ladung des anderen Vorzeichens voneinander elektrisch isoliert und zu derselben Einheit (13) mechanisch vereinigt sind, die von einem Steifigkeitselement (17) umfaßt ist, wobei die Richtung der Stromzuleitungen (14, 15, 16) in dieser Einheit (13) zur erwähnten Ebene senkrecht ist und diese in einem Punkt schneidet, der in unmittelbarer Nähe der Spitze (9) des erwähnten Winkels liegt.

2. Dreikomponentiger piezoelektrischer Beschleunigungsmesser nach Anspruch 1, **dadurch gekennzeichnet,** daß das erste Piezoelement (1) und das zweite Piezoelement (2) von der Spitze (9) des erwähnten Winkels in gleichem Abstand liegen.

3. Dreikomponentiger piezoelektrischer Beschleunigungsmesser nach einem der Ansprüche 1 und 2, **dadurch gekennzeichnet,** daß das Steifigkeitselement (17) in Form einer Drahtbandage ausgebildet ist.

4. Dreikomponentiger piezoelektrischer Beschleunigungsmesser nach Anspruch 3, **dadurch gekennzeichnet,** daß die elektrisch getrennten Stromzuleitungen (14, 15, 16) in Form eines dreiadrigen Antivibrationskabels (22) ausgebildet sind, auf das eine umlötete Drahtbandage aufgelegt ist, die mit einem Drahtanzug ausgeführt, zwischen den Windungen spaltlos und mit konstruktiven Elementen (23, 24) des Kabels (22) zusammengefügt ist.

5. Dreikomponentiger piezoelektrischer Beschleunigungsmesser nach Anspruch 3, **dadurch gekennzeichnet,** daß die elektrisch getrennten Stromzuleitungen (14, 15, 16) jeweils in Form eines eigenen Antivibrationskabels ausgebildet sind, wobei auf die Kabel in der vereinigten Einheit (13) eine umlötete Drahtbandage aufgelegt ist, die mit einem Drahtanzug ausgeführt, zwischen den Windungen spaltlos und mit den konstruktiven Kabelkonstruktionen zusammengefügt ist.

6. Dreikomponentiger piezoelektrischer Beschleunigungsmesser nach Anspruch 1, **dadurch gekennzeichnet,** daß die empfindlichen Piezoelemente (1, 2, 3) zylindrisch ausgeführt sind, wobei das dritte empfindliche Piezoelement (3) so angeordnet ist, daß der Schnittpunkt seiner Achse (6) der maximalen Empfindlichkeit mit der Halbierenden (8) dieses Winkels von der Spitze (9) des genannten Winkels in einem Abstand liegt, der kleiner als oder gleich $L \sqrt{2}$ ist, wo L die Länge der Erzeugenden des zylindrischen Empfindlichen Piezoelementes (3) bedeutet.

7. Dreikomponentiger piezoelektrischer Beschleunigungsmesser nach Anspruch 6, **dadurch gekennzeichnet,** daß er ein Gehäuse (18) enthält, in dem die Piezoelement (1, 2, 3) und die Stromzuleitungen (14, 15, 16) untergebracht sind und das eine vereinigende Einheit (13) für die elektrisch verbundenen Stromzuleitungen (10, 11, 12) für die Abnahme der elektrischen Ladung eines Vorzeichens darstellt und kubisch ausgeführt ist, wobei sämtliche Piezoelemente (1, 2, 3) im Gehäuse (18) so angeordnet sind, daß jede der zueinander senkrechten Wände (19, 20, 21) des Gehäuses (18) der Grundfläche nur eines zylindrischen Piezoelementes (1, 2, 3) parallel ist.

$L\sqrt{2}$

*FIG.1*

*FIG.2*

*FIG.3*

*FIG.4*

# INTERNATIONAL SEARCH REPORT

International Application No PCT/SU 89/00273

## I. CLASSIFICATION OF SUBJECT MATTER (if several classification symbols apply, indicate all) *

According to International Patent Classification (IPC) or to both National Classification and IPC

IPC$^5$.      G01P 15/09

## II. FIELDS SEARCHED

### Minimum Documentation Searched *

| Classification System . | Classification Symbols |
|---|---|
| IPC$^4$. | G01P 15/08, 15/09, G01V 1/16 |

Documentation Searched other than Minimum Documentation
to the Extent that such Documents are Included in the Fields Searched *

## III. DOCUMENTS CONSIDERED TO BE RELEVANT *

| Category * | Citation of Document, ¹¹ with indication, where appropriate, of the relevant passages ¹² | Relevant to Claim No. ¹³ |
|---|---|---|
| A | SU, A1, 1057910, (Krasnodarskoe spetsialnoe konstruktorsko-tekhnologicheskoe bjuro seismorazvedochnoi elektronnoi tekhniki), 30 November 1983 (30.11.83), the claims (cited in the description) | 1-7 |
| A | SU, A1, 667926 (R.E. Sarkisian et al.), 19 June 1979 (19.06.79), the claims (cited in the description) | 1-7 |
| A | SU, A1, 397868 (Institut fiziki zemli im. O. Ju. Shmidta AN SSSR), 14 February 1974, (14.02.74), the claims (cited in the description) | 1-7 |

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| 17 May 1990 (17.05.90) | 17 July 1990 (17.07.90) |
| International Searching Authority | Signature of Authorized Officer |
| ISA/SU | |

Form PCT/ISA/210 (second sheet) (January 1985)